# EUROPEAN PATENT SPECIFICATION

(11) **EP 1 772 952 B1**
(45) Date of publication and mention of the grant of the patent: **07.01.2009**
(21) Application number: 06254650.2
(22) Date of filing: 07.09.2006
(51) Int. Cl.: H02N 2/06, H01L 41/04, F02D 41/20

(54) **Injector control method**
Verfahren zur Steuerung eines Einspritzventils
Procédé de commande d'injecteur

(30) Priority: 06.10.2005 EP 05256253
(43) Date of publication of application: 11.04.2007
(73) Proprietor: Delphi Technologies, Inc., Troy, Michigan 48007 (US)
(72) Inventor: Hardy, Martin Paul, Gillingham, Kent, ME7 3QZ (GB); Balfour, Graham, Hampton, Middlesex, TW12 2NG (GB); Baker, Nigel, Canterbury, Kent, CT2 0LT (GB); Griffin, Peter, Maidstone, Kent ME14 2EU (GB)
(74) Representative: Gregory, John David Charles

(56) References cited:
- EP-A- 1 519 024
- EP-A- 1 689 004
- DE-A1- 19 921 456
- US-A- 5 130 598

## Description

### Technical Field

The present invention relates to a control method for controlling a fuel injector for delivering fuel to an associated engine cylinder or combustion space. In particular, the invention relates to a fuel injector of the type actuated by means of a piezoelectric actuator. Such injectors are used widely in common rail fuel injection systems for compression ignition internal combustion engines.

### Background of the Invention

In known common rail fuel systems, a high pressure fuel pump is arranged to charge an accumulator volume in the form of a common rail with fuel at high pressure for delivery to a plurality of associated injectors. Each injector includes a valve needle which is movable by means of an actuator, towards and away from a valve seat, to control fuel injection through a plurality of injector outlets.

It is known that particularly good injector performance can be achieved by using a piezoelectric actuator to drive movement of the valve needle. The piezoelectric actuator includes a stack of piezoelectric elements to which a voltage is applied to extend and contract the stack length. The actuator may be coupled directly to the valve needle so that, as the stack is retracted, the injector valve needle is caused to move with the stack retraction. Alternatively, the stack may be coupled to the valve needle via a motion amplifier (for example, a hydraulic amplifier). In other injectors the piezoelectric actuator controls valve needle movement indirectly through a servo valve.

One example of a piezoelectrically operable fuel injector is described in our granted European patent EP 0995901. The piezoelectric actuator in this case is coupled directly to the valve needle through a coupler having both hydraulic and mechanical coupling elements to provide variable amplification of movement of the valve needle.

Piezoelectric actuators are capable of generating high rates of force change which gives fast needle response. Injectors configured with direct-acting piezoelectric actuators are particularly beneficial in this regard. However, one problem with using a direct acting piezoelectric actuator is that a greater mechanical force is required from the actuator in order to move the valve needle. Such high forces, and the associated high rates of force switching, are transmitted through the injector to the associated engine and result in an undesirable level of audible noise from the engine structure.

It is an object of the present invention to provide a method of controlling a piezoelectrically operable fuel injector in a manner which alleviates or removes the aforementioned noise problem.

### Summary of Invention

According to the present invention, a method for controlling charging and discharging of a piezoelectric actuator for use in fuel injector having an inject mode and a non-inject mode includes applying a charging current of variable amplitude to the actuator during a charge mode, wherein the amplitude of the charging current optionally varies with a first PWM frequency, and applying a discharging current of variable amplitude to the actuator during a discharge mode, wherein the amplitude of the discharging current optionally varies with a second PWM frequency. The charging current and the discharging current are monitored during the charge and discharge mode, respectively. The monitored charging and/or discharging current are compared with a selected current waveform and the discharging current and the charging current are controlled in response to the result of the comparison by switching the charging and/or discharging current on and off in response to the result of the comparison. The first and/or second PWM frequency may be varied throughout the charge mode and/or the discharge mode so as to suppress resonance modes within the actuator.

Because the PWM amplitude, and hence drive frequency, is variable (i.e. irregular) throughout at least one of the charge and discharge modes, the generation of audible noise due to resonance effects within the actuator is suppressed. This provides an advantage over conventional PWM drive methods where a constant amplitude/frequency PWM drive signal is used which tends to excite resonance modes within the actuator or the injector itself. The or each PWM drive frequency is varied by deliberately controlling the amplitude of the charging or discharging current during the charge and discharge mode, respectively, so as to have a variable frequency throughout the mode.

The second PWM frequency may be adjusted throughout the discharge mode in response to the monitored discharging current. Alternatively, or in addition, the first PWM frequency may be adjusted throughout the charge mode in response to the monitored charging current. Preferably, both the PWM frequency of the discharging current and of the charging current are variable.

The second PWM frequency during the discharge mode need not, but could, follow the same pattern of variation as the first PWM frequency in the discharge mode.

The method is applicable to injectors of the discharge-to-inject type and the charge-to-inject type. In other words, the method may involve either discharging the actuator in order to initiate an injection event or charging the actuator in order to initiate an injection event.

In a preferred embodiment, the step of varying the first and second PWM frequencies of the charging and/or discharging current amplitudes includes comparing the monitored charging and/or discharging current with a selected current waveform which is variable over time. The selected current waveform defines a peak current level as a function of time and the charging and/or discharging current is switched on and off in dependence upon whether the monitored current is less than (or greater than, depending on whether the peak current level is positive or negative) the selected current waveform, so as to induce a variable PWM frequency to the charging and/or discharging current amplitude.

In one particularly preferred embodiment, the selected current waveform includes a peak current waveform and a minimum current waveform which define maximum and minimum thresholds, respectively, for comparison with the monitored charging and/or discharge current. The minimum current waveform may be a predetermined proportion of the peak current waveform or, alternatively, may be an alternative, selected waveform which is independent of (although could be selected to be the same as) the peak current waveform.

In a discharge-to-inject injector, the method preferably includes slowing or smoothing the rate of charge transfer within one or more of (i) a transition region between the non-inject mode and the discharge mode, (ii) a transition region between the discharge mode and the inject mode, (iii) a transition region between the inject mode and the charge mode, and (iv) a transition region between the charge mode and the non-inject mode in comparison with the rate of charge transfer during the preceding or subsequent charge and/or discharge mode.

By 'slowed' or 'smoothed' it is intended to mean that the rate of charge transfer (current) is reduced in comparison with the rate of charge transfer (current) during the preceding charge and/or discharge mode.

The method is equally applicable to a charge-to-inject injector.

Advantageously, the invention enables the average charge and/or discharge current to be varied substantially continuously over time which provides a high degree of flexibility over the rate at which charge is transferred onto, or off of, the stack.

The selected current waveform may include a maximum current waveform and a minimum current waveform, which define variable maximum and minimum thresholds, respectively, for comparison with the monitored charging and/or discharge current. By appropriate shaping of the maximum and minimum current waveforms, the average charge and/or discharge current can be varied as required to implement a desired rate of displacement of the actuator.

In one embodiment, the minimum current waveform is defined as a fixed proportion of the maximum current waveform, for example fifty percent. However, this need not be the case and, in a further embodiment, the minimum current waveform is determined, or shaped, independently of the maximum current waveform.

In addition to the benefit of providing an increased degree of control of the average charging and/or discharging current that is applied to the actuator, in a preferred embodiment, the current waveform is selected so as to induce a variable PWM frequency to the discharging current.

It will be appreciated that preferred and/or optional features of the first aspect of the invention may be provided in the second aspect of the invention also (and vice versa), alone or in appropriate combination.

### Brief Description of Drawings

The present invention will now be described, by way of example only, with reference to the accompanying drawings in which:
Figure 1 is a diagram to illustrate the voltage characteristic for an injection event in a piezoelectric injector controlled by means of a conventional PWM drive waveform,
Figure 2 shows a portion of the voltage characteristic in Figure 1 on an enlarged scale to illustrate the nature of the PWM drive waveform more clearly,
Figure 3 shows a portion of the voltage characteristic on an enlarged scale for a piezoelectric injector controlled in accordance with a first embodiment of the invention,
Figure 4 shows the drive circuit for implementing the control method described with reference to Figures 2 and 3,
Figure 5 is a graphical illustration of the discharge current through the stack for an embodiment of the present invention for a selected current waveform, Ipeak, in comparison with the discharge current in a conventional control method,
Figure 6 is a graphical illustration of the discharge current through the stack where a different current waveform, Ipeak, is selected, and
Figure 7 is a diagram to illustrate the voltage characteristic in a piezoelectric injector controlled in accordance with an alternative embodiment of the invention.

### Detailed Description of Preferred Embodiments

In accordance with the present invention, a drive circuit controls the opening and closing of the injector by controlling operation of the piezoelectric actuator for the injector valve needle. The piezoelectric actuator includes a stack of piezoelectric elements which is coupled to the injector valve needle so that by varying the charge (and hence the voltage) across the piezoelectric stack, the length of the stack is caused to extend and contract, and hence valve needle movement is controlled. The drive circuit enables precise control over the length of the piezoelectric stack and so controls opening and closing of the injector to meter and inject precise amounts of fuel into the associated engine cylinder.

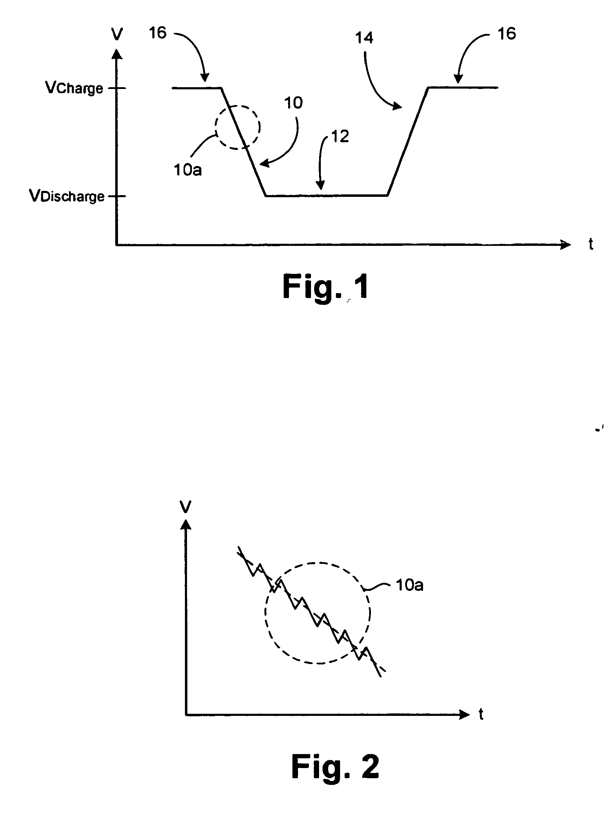

The drive circuit operates in a discharge mode, in which the piezoelectric stack is discharged to contract its length, and a charge mode, in which the piezoelectric stack is charged to increase its length. Referring to Figure 1, during the discharge mode (identified as 10) the voltage level across the stack is reduced from a maximum voltage level (Vcharge) to a minimum voltage level (Vdischarge) until, at some point along the discharge curve, the injector needle is caused to open so as to initiate injection into the associated engine cylinder. When the stack is discharged to the minimum voltage level the injector is in an inject mode (full needle lift) in which injection occurs. The inject mode is identified generally as 12.

After a predetermined time interval determined by the required length of the injection event, the drive circuit operates to re-charge the stack so as to initiate valve needle closing movement. During the charge mode (identified at 14) the voltage across the stack is increased from the minimum voltage level (Vdischarge) to the maximum voltage level (Vcharge). When the stack reaches the Vcharge level the injector is in a non-inject mode (needle fully closed) in which no injection occurs. The non-inject mode is identified at 16.

It is known for the drive circuit to transfer energy (charge) to and from the piezoelectric actuator using a PWM (pulse width modulation) control signal. Examples of PWM drive circuits are described in our co-pending patent applications EP 1 400 676 A and EP 1 519 024 A and in our granted US patent, US 6 760 212.

Although the implementation of a PWM control signal has been found to provide efficiency benefits, the inventors have now found that a drawback of using PWM control arises from the repetitive nature of the PWM signal. Referring to Figure 2, the dashed line 10a shows an enlarged portion of the voltage level during the discharge mode 10. During the discharge mode 12 the voltage is transferred from the stack by means of a series of regularly spaced voltage steps. The frequency of the resulting voltage steps (charge transfer intervals) is determined by the frequency of the PWM control signal provided by the drive circuit. The regular frequency of the charge transfer steps tends to reinforce excitement of resonant modes within the stack, which in turn leads to the generation of audible noise as the resonance effect is transmitted through the actuator to the engine structure.

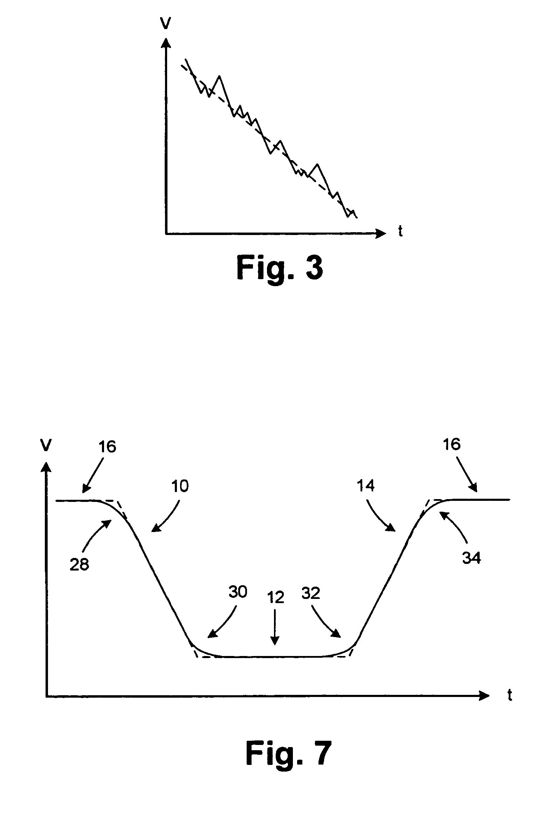

Referring to Figure 3, the present invention addresses the aforementioned resonance problem by providing a PWM control signal of variable (irregular) frequency throughout the discharge/charge mode of an injection event. As the PWM charge and discharge steps occur with a variable frequency the excitement of resonant modes within the piezoelectric actuator is reduced. The total force change remains substantially unchanged in discharging or charging the stack as this is governed by the hydraulic and/or mechanical motion amplification and stiffness between the actuator and the injector valve needle, and the average gradient of the voltage-time characteristic also remains unaltered. However, in implementing a more random and less repetitive PWM control strategy the transmission of audible noise within the actuator is reduced.

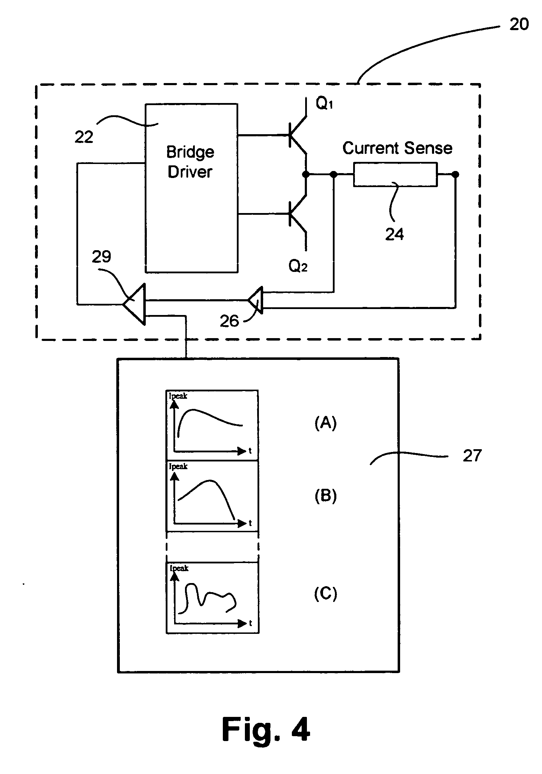

Figure 4 illustrates schematically a section of a drive circuit, referred to generally as 20, for implementing variable PWM frequency control of the piezoelectric actuator. The drive circuit includes a bridge driver circuit 22, in the form of a half or full H-bridge circuit, for controlling charge and discharge switches, Q1 and Q2 respectively. The charge and discharge switches Q1, Q2 are operable so as to allow charge to be transferred to, or transferred from, the actuator stack depending on which of the switches is activated. If the charge switch Q1 is closed and the discharge switch Q2 is open, the actuator is in the charge mode during which charge is transferred onto the piezoelectric stack. If the charge switch Q1 is open and the discharge switch Q2 is closed, the actuator is in the discharge mode during which charge is transferred from the stack. If both the charge and the discharge switches Q1, Q2 are open the actuator is neither charging nor discharging and so the injector is in either the inject or the non-inject mode, depending on whether the stack has just been discharged or charged. Charging and discharging of the stack is controlled by controlling the current flow through the stack: if the charging switch is closed the current flow is in a direction to charge the injector and if the discharging switch is closed the current flow is in a direction to discharge the injector.

The drive circuit 20 further includes a current sensing means including a resistor 24 and a current sensor 26 for sensing the current flow (i.e. rate of change of charge) through the stack. The current measurement is supplied to a comparator 29 which receives, at one input, the measured current and, at its other input, a selected current waveform (Ipeak) which is stored in the memory of an associated microprocessor 27. Three possible current waveforms are identified in Figure 4 by way of illustration, although in practice a much higher number of current waveforms will be stored in the microprocessor memory. The current waveform is selected in the microprocessor 27 in accordance with the injector drive requirements. The comparator 29 compares the current waveform with the measured current and controls the bridge driver circuit 22 depending on the comparator output.

More specifically, referring again to Figure 3 which shows the discharge operation, initially the discharge switch Q2 is held closed until the discharge current through the resistor 24 exceeds (more negative than) Ipeak, as defined by the selected current waveform at time Δt. The current waveform Ipeak defines the maximum current waveform as a function of time for comparison with the monitored current. At this point the discharge switch Q2 is opened until the measured current falls below (more positive than) ΔI of the peak current, where ΔI below the peak current waveform defines a minimum current waveform as a function of time. Typically, ΔI is set at 50% of Ipeak, although ΔI may be a variable amount which is selected in dependence upon the injector operating requirements. The switching of the discharge switch Q2 continues throughout the discharge mode, with the discharge current being maintained at an RMS current value until the required reduction in stack length is achieved. In this way the PWM control frequency is determined by the frequency of the switching, and hence by the Ipeak current waveform.

The above-described method is applied to the charge mode also so as to impart a variable PWM drive frequency to the current amplitude during actuator charging.

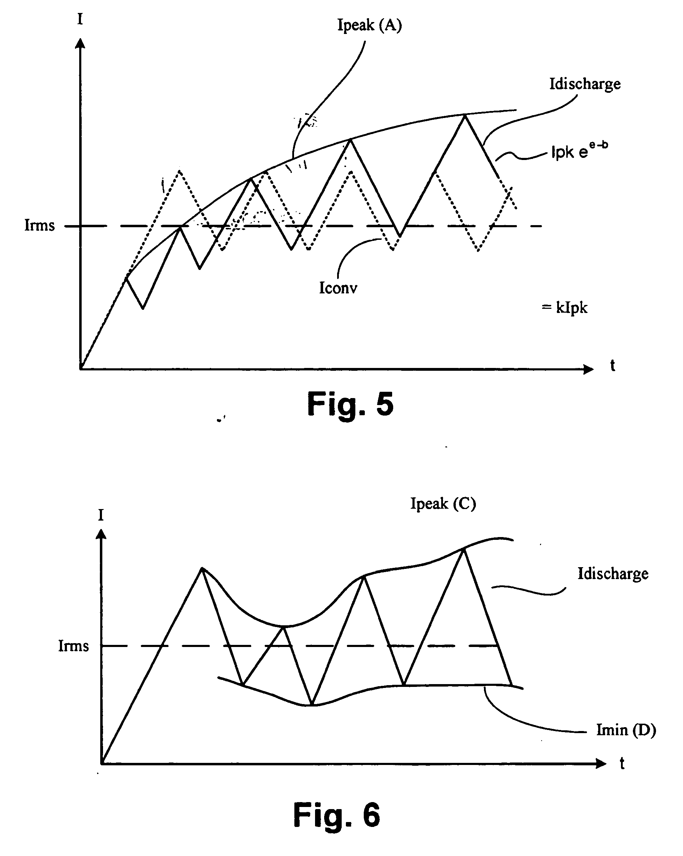

Figure 5 shows the discharge current (Idischarge) for the method described with reference to Figure 4 where the Ipeak current waveform, A, is selected, in comparison with the discharge current (Iconv) for the conventional control method. Using the conventional control method, the current waveform Ipeak is a constant with time so that the chopping frequency (PWM frequency) of the discharge current amplitude is fixed throughout the discharge mode. However, in the present invention the current amplitude (Idischarge) has a frequency that varies through the discharge mode. It will be appreciated that the graphical illustration in Figure 5 shows only the initial portion of the Ipeak current waveform, A, in Figure 4, as it rises towards its maximum value.

In both the conventional method and the method of the invention the RMS current is the same (and constant throughout the charge and discharge modes). However, it is a distinguishing feature of the method of the present invention that, because of the shape of the current waveform Ipeak, the discharge current has an irregular or variable frequency, with the amplitude of the discharge current following the shape of the current waveform Ipeak.

In another embodiment, rather than defining the minimum current waveform as a fixed proportion of the peak current waveform Ipeak, the minimum current waveform may itself be controlled by selecting from a plurality of waveforms stored in the memory of the microprocessor 27. An example of this control method is shown in Figure 6, where current waveforms Ipeak (C)and Imin (D) define the limits of the variable amplitude discharge (or charge) current during the switching phase. Again, the RMS current is the same as in the conventional method, but the PWM frequency of the discharge current is variable throughout the discharge mode as it varies between the Ipeak and Imin limits.

Charging of the stack at the end of an injection event is carried out in a similar way, by maintaining the stack at a mean charging current. The selected current waveform may be the same during both the discharge and charge modes, or alternatively a different Ipeak current waveform may be selected during the charge mode.

In practice, the appropriate current waveform Ipeak (e.g. A, B or C) is selected to be that which minimises emitted audible noise and dynamic stress and is consistent with the hydraulic response of the valve needle actuator system. It is also important to select the current waveform so that valve needle acceleration and velocity are achievable, in accordance with target values, and so that maximum lift of the valve needle is achieved within the required timescale.

In one embodiment of the invention, the variable PWM drive frequency is only implemented during certain stages of actuator operation, for example when resonant excitation of the actuator/injector is most likely to generate unsatisfactory audible noise levels. By way of example, it may be that the variable PWM drive frequency need only be implemented for events for which audible noise is critical. For example, it is particularly important to limit audible noise under idle conditions, at low speed and low load.

Furthermore, a variable PWM drive frequency may be implemented during both the discharge and the charge modes, or alternatively may be implemented during only one or the other of the charge or discharge modes.

Although it is described above that the comparator 29 compares the selected current waveform Ipeak with the measured current in order to drive the actuator with a variable PWM waveform, it should be appreciated that this need not be the case and the invention encompasses circumstances in which the comparator compares a selected current waveform Ipeak with the measured current to drive the stack with a substantially constant PWM frequency. In such circumstances, although the PWM frequency remains substantially constant, the method of the invention permits the RMS charge or discharge current to be continuously variable over time which provides a high degree of control over the rate at which charge is transferred onto, and off of, the stack during the charge and/or discharge mode.

Referring to Figure 7, in an alternative embodiment of the invention the PWM control signal is further modified so that the abrupt voltage change at the start of the discharge mode, at the end of the discharge mode, at the start of the charge mode and at the end of the charge mode is 'softened' or 'smoothed' by slowing the rate of charge transfer to and from the stack in these regions. It has been observed that the abrupt force change which occurs in these regions in conventional methods excites resonance modes of the actuator which contribute to the audible noise level transmitted through the injector to the engine structure. By smoothing the transition between regions of force change, resonance within the actuator is reduced and so too is the audible noise level.

The transition region between the initial non-inject and discharge modes (i.e. between 16 and 10) is referred to as the non-inject/discharge transition region 28, the transition between the discharge and inject modes (i.e. between 10 and 12) is referred to as the discharge/inject transition region 30, the transition region between the inject and charge modes (i.e. 12 and 14) is referred to as the inject/charge transition region 32 and the transition region between the charge and non-inject modes (i.e. 14 and 16) is referred to as the charge/non-inject transition region 34. By way of example, consider the discharge/inject transition region 30. The PWM drive signal may be modified so that the charge transfer characteristic is smoothed continuously in this region 30 so that it takes the form of a part co-sine or sine-wave function. This is achieved by controlling the actuator so that the charge transfer rate (as indicated by the dashed line) is reduced in comparison with the charge transfer rate for the conventional method (as indicated by the solid line).

The same smoothing effect is also applied in the non-inject/discharge transition region 28, the inject/charge transition region 32 and the charge/non-inject transition region 34 to contribute to the noise reduction benefits. It has been found that, for some applications, for the purpose of reducing the audible noise level the charge/non-inject transition region 34 is the most important region in which to apply a smoothing effect, with the non-inject/discharge region 28 also being important. Smoothing in the discharge/inject transition region 30 and in the inject/charge transition region 32 is less critical for noise reduction but nonetheless still has advantages for actuator life, so in a preferred embodiment the voltage gradient is smoothed in all four transition regions.

The drive circuit in Figure 4 is used to implement charge transfer smoothing by appropriate modification of the current waveform, Ipeak, in the transition region(s). The current waveform is selected so as to have a reduced RMS current value in the transition region(s), resulting in a lower voltage gradient (dV/dt). So, for example, for a short period of time at the start of the discharge mode, in the non-inject/discharge transition region 28, the current waveform is modified so as to ensure the RMS current starts at a relatively low value before gradually increasing to the constant RMS current value through the main period of the discharge mode (i.e. the period between regions 28 and 30).

In an alternative implementation (not illustrated), the PWM drive signal may be modified so that charge transfer rate is reduced in a discontinuous manner, through a series of small discrete steps, in any of the non-inject/discharge transition region 28, the discharge/inject transition region 30, the inject/charge transition region 32 and the charge/non-inject transition region 34.

It will be appreciated that although the invention has been described in relation to an injector operating in a discharge-to-inject mode, the invention is equally applicable to injectors operating in a charge-to-inject mode. Likewise, the methods are relevant to direct or indirect acting piezoelectric injectors, including piezoelectrically operable injectors in which the piezoelectric actuator controls a servo valve to control movement of the valve needle.

## Claims

1. A method for controlling charging and discharging of a piezoelectric actuator for use in a fuel injector having an inject mode (12) and a non-inject mode (16); the method comprising:
applying a charging current of variable amplitude to the actuator during a charge mode (14),
applying a discharging current of variable amplitude to the actuator during a discharge mode (10),
monitoring the charging current and the discharging current during the charge and discharge modes (14, 10), respectively,
comparing the monitored charging and/or discharging current with a selected current waveform (Ipeak, ΔI; Imin), and
controlling the discharging current and the charging current in response to the result of the comparison by switching the charging and/or discharging current on and off in response to the result of the comparison.

2. The method as claimed in claim 1, wherein the selected current waveform includes a maximum current waveform (Ipeak) and a minimum current waveform (ΔI; Imin), which define variable maximum and minimum thresholds, respectively, for comparison with the monitored charging and/or discharge current.

3. The method as claimed in claim 1 or claim 2, wherein the selected current waveform (Ipeak, ΔI; Imin) is selected so as to induce a variable PWM frequency to the charging current.

4. The method as claimed in any of claims 1 to 3, wherein the selected current waveform (Ipeak, ΔI; Imin) is selected so as to induce a variable PWM frequency to the discharging current.

5. The method as claimed in claim 1, wherein the amplitude of the charging current varies with a first PWM frequency and the amplitude of the discharging current varies with a second PWM frequency, and the PWM frequency is varied throughout the discharge mode (10) and/or the charge mode (14) so as to suppress resonance modes within the actuator.

6. The method as claimed in claim 5, including:
adjusting the second PWM frequency throughout the discharge mode (10) in response to the monitored discharging current.

7. The method as claimed in claim 5 or claim 6, including:
adjusting the first PWM frequency throughout the charge mode (14) in response to the monitored charging current.

8. The method as claimed in any one of claims 5 to 7, including discharging the actuator in order to initiate an injection event.

9. The method as claimed in any one of claims 5 to 7, including charging the actuator in order to initiate an injection event.

10. The method as claimed in any one of claims 5 to 9, wherein varying the second PWM frequency of the discharging current amplitude includes:
comparing the monitored discharging current with a selected current waveform (Ipeak) which is variable over time and switching the discharging current on and off in response to the result of the comparison, so as to induce a variable PWM frequency to the discharging current.

11. The method as claimed in any one of claims 5 to 10, wherein varying the first PWM frequency of the charging current amplitude includes:
comparing the monitored charging current with a selected current waveform (Ipeak) which is variable over time and switching the charging current on and off in response to the result of the comparison, so as to induce a variable PWM frequency to the charging current.

12. The method as claimed in claim 10 or claim 11, wherein the selected current waveform includes a peak current waveform (Ipeak) and a minimum current waveform (ΔI; Imin) which define maximum and minimum thresholds, respectively, for comparison with the monitored charging and/or discharge current.

13. The method as claimed in any one of claims 5 to 12, including slowing the rate of charge transfer within one or more of (i) a transition region (28) between the non-inject mode (16) and the discharge mode (10), (ii) a transition region (30) between the discharge mode (10) and the inject mode (12), (iii) a transition region (32) between the inject mode (12) and the charge mode (14), and (iv) a transition region (34) between the charge mode (14) and the non-inject mode (16), in comparison with the rate of charge transfer during a preceding charge and/or discharge mode (10, 14).

14. The method as claimed in any one of claims 5 to 12, including slowing the rate of charge transfer within one or more of (i) a transition region between the non-inject mode (16) and the charge mode (10), (ii) a transition region between the charge mode (14) and the inject mode (12) (iii) a transition region between the inject mode (12) and the discharge mode (10) and (iv) a transition region between the discharge mode (10) and the non-inject mode (16), in comparison with the rate of charge transfer during the preceding or subsequent charge and/or discharge mode (14, 10).

## Patentansprüche

1. Verfahren zum Steuern eines Ladens und Entladens eines piezoelektrischen Aktuators zur Verwendung in einem Brennstoffinjektor mit einer Einspritzbetriebsart (12) und einer Nicht-Einspritzbetriebsart (16); wobei das Verfahren umfasst, dass:
ein Ladestrom mit veränderlicher Amplitude an den Aktuator während einer Ladebetriebsart (14) angelegt wird,
ein Entladestrom mit veränderlicher Amplitude an den Aktuator während einer Entladebetriebsart (10) angelegt wird,
der Ladestrom und der Entladestrom während der Lade- bzw. Entladebetriebsarten (14, 10) überwacht werden,
der überwachte Lade- und/oder Entladestrom mit einer gewählten Stromwellenform (Ipeak, ΔI; Imin) verglichen wird, und
der Entladestrom und der Ladestrom in Ansprechen auf das Ergebnis des Vergleichs durch Ein- und Ausschalten des Lade-und/oder Entladestroms in Ansprechen auf das Vergleichsergebnis gesteuert werden.

2. Verfahren nach Anspruch 1,
wobei die gewählte Stromwellenform eine maximale Stromwellenform (Ipeak) und eine minimale Stromwellenform (ΔI; Imin) aufweist, die veränderliche maximale bzw. minimale Schwellen zum Vergleich mit dem überwachten Lade- und/oder Entladestrom definieren.

3. Verfahren nach einem der Ansprüche 1 oder 2,
wobei die gewählte Stromwellenform (Ipeak, ΔI; Imin) so gewählt ist, um an dem Ladestrom eine veränderliche PWM-Frequenz zu bewirken.

4. Verfahren nach einem der Ansprüche 1 bis 3,
wobei die gewählte Stromwellenform (Ipeak, ΔI; Imin) so gewählt ist, um an dem Entladestrom eine veränderliche PWM-Frequenz zu bewirken.

5. Verfahren nach Anspruch 1,
wobei sich die Amplitude des Ladestroms mit einer ersten PWM-Frequenz ändert und sich die Amplitude des Entladestroms mit einer zweiten PWM-Frequenz ändert, und wobei die PWM-Frequenz über die Entladebetriebsart (10) und/oder die Ladebetriebsart (14) verändert wird, um so Resonanzmoden in dem Aktuator zu unterdrücken.

6. Verfahren nach Anspruch 5, umfassend, dass:
die zweite PWM-Frequenz über die Entladebetriebsart (10) in Ansprechen auf den überwachten Entladestrom eingestellt wird.

7. Verfahren nach einem der Ansprüche 5 oder 6, umfassend, dass:
die erste PWM-Frequenz über die Ladebetriebsart (14) in Ansprechen auf den überwachten Ladestrom eingestellt wird.

8. Verfahren nach einem der Ansprüche 5 bis 7,
umfassend, dass der Aktuator entladen wird, um ein Einspritzereignis einzuleiten.

9. Verfahren nach einem der Ansprüche 5 bis 7,
umfassend, dass der Aktuator geladen wird, um ein Einspritzergebnis einzuleiten.

10. Verfahren nach einem der Ansprüche 5 bis 9,
wobei ein Ändern der zweiten PWM-Frequenz der Entladestromamplitude umfasst, dass:
der überwachte Entladestrom mit einer gewählten Stromwellenform (Ipeak) verglichen wird, die über die Zeit veränderlich ist, und der Entladestrom in Ansprechen auf das Ergebnis des Vergleichs ein-und ausgeschaltet wird, um so an dem Entladestrom eine veränderliche PWM-Frequenz zu bewirken.

11. Verfahren nach einem der Ansprüche 5 bis 10,
wobei ein Ändern der ersten PWM-Frequenz der Ladestromamplitude umfasst, dass:
der überwachte Ladestrom mit einer gewählten Stromwellenform (Ipeak) verglichen wird, die mit der Zeit veränderlich ist, und der Ladestrom in Ansprechen auf das Ergebnis des Vergleichs ein- und ausgeschaltet wird, um so an dem Ladestrom eine veränderliche PWM-Frequenz zu bewirken.

12. Verfahren nach einem der Ansprüche 10 oder 11,
wobei die gewählte Stromwellenform eine Spitzenstromwellenform (Ipeak) und eine minimale Stromwellenform (ΔI; Imin) aufweist, die maximale bzw. minimale Schwellen zum Vergleich mit dem überwachten Lade- und/oder Entladestrom definieren.

13. Verfahren nach einem der Ansprüche 5 bis 12,
umfassend, dass die Rate der Ladungsübertragung in einem oder mehreren aus (i) einem Übergangsgebiet (28) zwischen der Nichteinspritzbetriebsart (16) und der Entladebetriebsart (10), (ii) einem
Übergangsgebiet (30) zwischen der Entladebetriebsart (10) und der Einspritzbetriebsart (12), (iii) einem Übergangsgebiet (32) zwischen der Einspritzbetriebsart (12) und der Ladebetriebsart (14) und (iv) einem Übergangsgebiet (34) zwischen der Ladebetriebsart (14) und der Nichteinspritzbetriebsart (16) im Vergleich mit der Rate der Ladungsübertragung während einer vorhergehenden Lade-und/oder Entladebetriebsart (10, 14) verlangsamt wird.

14. Verfahren nach einem der Ansprüche 5 bis 12,
umfassend, dass die Rate einer Ladungsübertragung in einem oder mehreren aus (i) einem Übergangsgebiet zwischen der Nichteinspritzbetriebsart (16) und der Ladebetriebsart (10), (ii) einem
Übergangsgebiet zwischen der Ladebetriebsart (14) und der Einspritzbetriebsart (12), (iii) einem Übergangsgebiet zwischen der Einspritzbetriebsart (12) und der Entladebetriebsart (10) und (iv) einem Übergangsgebiet zwischen der Entladebetriebsart (10) und der Nichteinspritzbetriebsart (16) im Vergleich mit der Rate der Ladungsübertragung während der vorhergehenden oder anschließenden Lade- und/oder Entladebetriebsart (14, 10) verlangsamt wird.

## Revendications

1. Procédé pour commander la charge et la décharge d'un actionneur piézo-électrique destiné à être utilisé dans un injecteur de carburant présentant un mode d'injection (12) et un mode de non-injection (16), le procédé comprenant :
d'appliquer un courant de charge d'amplitude variable à l'actionneur pendant un mode de charge (14),
d'appliquer un courant de décharge d'amplitude variable à l'actionneur pendant un mode de décharge (10),
de surveiller le courant de charge et le courant de décharge pendant le mode de charge et le mode de décharge (14, 10) respectivement,
de comparer le courant de charge et/ou le courant de décharge surveillés avec une forme d'onde de courant choisie (Ipic, ΔI ; Imin), et
de commander le courant de décharge et le courant de charge en réponse au résultat de la comparaison en commutant le courant de charge et/ou le courant de décharge en tout ou rien en réponse au résultat de la comparaison.

2. Procédé selon la revendication 1, dans lequel la forme d'onde de courant choisie inclut une forme d'onde à courant maximum (Ipic) et une forme d'onde à courant minimum (ΔI ; Imin), qui définissent des seuils maximum et minimum variables, respectivement, pour la comparaison avec le courant de charge et/ou de décharge surveillés.

3. Procédé selon la revendication 1 ou 2, dans lequel la forme d'onde de courant choisie (Ipic, ΔI ; Imin) est choisie de manière à induire une fréquence à modulation de largeur d'impulsion variable au courant de charge.

4. Procédé selon l'une quelconque des revendications 1 à 3, dans lequel la forme d'onde de courant choisie (Ipic, ΔI ; Imin) est choisie de manière à induire une fréquence à modulation de largeur d'impulsion variable au courant de décharge.

5. Procédé selon la revendication 1, dans lequel l'amplitude du courant de charge varie avec une première fréquence à modulation de largeur d'impulsion et l'amplitude du courant de décharge varie avec une seconde fréquence à modulation de largeur d'impulsion, et la fréquence à modulation de largeur d'impulsion est variée pendant tout le mode de décharge (10) et/ou le mode de charge (14) pour supprimer les modes de résonance à l'intérieur de l'actionneur.

6. Procédé selon la revendication 5, incluant :
d'ajuster la seconde fréquence à modulation de largeur d'impulsion pendant tout le mode de décharge (10) en réponse au courant de décharge surveillé.

7. Procédé selon la revendication 5 ou la revendication 6, incluant :
d'ajuster la première fréquence à modulation de largeur d'impulsion pendant tout le mode de charge (14) en réponse au courant de charge surveillé.

8. Procédé selon l'une quelconque des revendications 5 à 7, incluant de décharger l'actionneur afin de démarrer un événement d'injection.

9. Procédé selon l'une quelconque des revendications 5 à 7, incluant de charger l'actionneur afin de démarrer un événement d'injection.

10. Procédé selon l'une quelconque des revendications 5 à 9, dans lequel la variation de la seconde fréquence à modulation de largeur d'impulsion pour l'amplitude du courant de décharge inclut :
de comparer le courant de décharge surveillé avec une forme d'onde de courant choisie (Ipic) qui est variable au cours du temps, et de commuter le courant de décharge en tout ou rien en réponse au résultat de la comparaison, de manière à induire une fréquence à modulation de largeur d'impulsion variable au courant de décharge.

11. Procédé selon l'une quelconque des revendications 5 à 10, dans lequel la variation de la première fréquence à modulation de largeur d'impulsion de l'amplitude du courant de charge inclut :
de comparer le courant de charge surveillé avec une forme d'onde de courant choisie (Ipic) qui est variable au cours du temps et de commuter le courant de charge en tout ou rien en réponse au résultat de la comparaison, de manière à induire une fréquence à modulation de largeur d'impulsion variable au courant de charge.

12. Procédé selon la revendication 10 ou la revendication 11, dans lequel la forme d'onde de courant choisie inclut une forme d'onde de courant de pic (Ipic) et une forme d'onde de courant minimum (ΔI ; Imin) qui définissent un seuil maximum et un seuil minimum, respectivement, pour la comparaison avec le courant de charge et/ou le courant de décharge surveillés.

13. Procédé selon l'une quelconque des revendications 5 à 12, incluant de ralentir le taux de transfert de charge dans une ou plusieurs régions parmi (i) une région de transition (28) entre le mode de non-injection (16) et le mode de décharge (10), (ii) une région de transition (30) entre le mode de décharge (10) et le mode d'injection (12), (iii) une région de transition (32) entre le mode d'injection (12) et le mode de charge (14), et (iv) une région de transition (34) entre le mode de charge (14) et le mode de non-injection (16), en comparaison avec le taux de transfert de charge pendant un mode de charge et/ou de décharge (10, 14) précédent.

14. Procédé selon l'une quelconque des revendications 5 à 12, incluant de ralentir le taux de transfert de charge dans une ou plusieurs régions parmi (i) une région de transition (28) entre le mode de non-injection (16) et le mode de charge (14), (ii) une région de transition (30) entre le mode de charge (14) et le mode d'injection (12), (iii) une région de transition (32) entre le mode d'injection (12) et le mode de décharge (10), et (iv) une région de transition (34) entre le mode de décharge (10) et le mode de non-injection (16), en comparaison avec le taux de transfert de charge pendant le mode de charge et/ou de décharge précédent ou suivant (14, 10).
